Europäisches Patentamt

European Patent Office

Office européen des brevets

(19)

(11) Numéro de publication: **0 462 348 A1**

# (12) DEMANDE DE BREVET EUROPEEN

(21) Numéro de dépôt: 90500062.6

(22) Date de dépôt: 27.06.90

(51) Int. Cl.⁵: **B65B 51/14**, B29C 65/18

(30) Priorité: **12.06.90 ES 9001619**

(43) Date de publication de la demande:
**27.12.91 Bulletin 91/52**

(84) Etats contractants désignés:
**AT BE CH DE DK FR GB GR IT LI LU NL SE**

(71) Demandeur: **Rigon, Gian Domenico**
**Pol. Ind. E1 Pino, C/A, parc. 16, nave B-14**
**E-41016 Sevilla(ES)**

(72) Inventeur: **Rigon, Gian Domenico**
**Pol. Ind. E1 Pino, C/A, parc. 16, nave B-14**
**E-41016 Sevilla(ES)**

(74) Mandataire: **Alonso Langle, Emilio**
**Naciones, 12, 3 B**
**E-28006 Madrid(ES)**

(54) **Améliorations introduites au niveau des machines de conditionnement.**

(57) Il s'agit d'améliorations visant à obtenir que le conditionnement utilise un papier spécial, thermosoudable. Le principe consiste à établir un élément chauffant transversal A et au moins un élément chauffant longitudinal B, constitués l'un et l'autre de deux baguettes, l'une inférieure et fixe (5), l'autre supérieure et basculante (6), qui font office d'étau susceptible d'assujettir les bords du papier au niveau des zones d'union prévues à cet effet. L'élément chauffant transversal est équipé de plus de baguettes doubles (5'-5") et (6'-6"), entre lesquelles coulisse une lame de coupe sur la bande de papier continue, dont le fonctionnement est synchronisé d'une manière appropriée avec les autres mécanismes de la machine.

FIG.-2

## OBJET DE L'INVENTION

La présente invention concerne toute une série d'améliorations introduites au niveau des machines de conditionnement, notamment des machines pour conditionnement de denrées alimentaires contenues dans un plateau ou répondant à une configuration analogue.

## ANTECEDENTS DE L'INVENTION

La commercialisation de produits divers contenus dans un plateau et conditionnés sous blister constitue à l'heure actuelle une solution de plus en plus répandue. Pour ce faire, il est fait appel essentiellement à deux solutions. La première repose sur l'utilisation de deux feuilles de matière plastique, fournies par deux bobines indépendantes, de telle façon que les deux feuilles s'étendent l'une sur l'autre avec interposition du produit concerné; il est procédé ensuite à la thermosoudure des deux feuilles, au niveau tant de leurs bords longitudinaux que transversalement, et très précisément en correspondance avec les lignes imaginaires de séparation entre les plateaux successifs de produit. Dans ce dernier cas, il est fait appel concrètement pour la soudure à un filament métallique dûment chauffé qui non seulement ferme d'une manière simultanée les extrémités proches de deux plateaux adjacents, mais qui agit de plus comme un élément de coupe et de séparation entre plateaux.

La deuxième solution fait appel à une bande unique de matière plastique qu'il faut soumettre à un processus de rabattement sur elle-même, avec interposition des produits; il ne faut dans ce cas qu'une seule ligne de soudure longitudinale; mais la démarche est la même que dans le cas précédent pour la fermeture des plateaux au niveau des deux autres bords et pour la séparation entre plateaux.

A l'heure actuelle, et pour des raisons d'hygiène, la tendance va dans le sens du remplacement de la matière plastique conventionnelle par du papier, mais concrètement par un papier spécial susceptible d'être collé aussi sous chaleur, comme dans le cas de la matière plastique. Toutefois, et logiquement, l'élément fil métallique qui effectue la découpe de la matière plastique sur les machines conventionnelles ne peut pas assurer la découpe du papier étant donné que le réchauffage de celui-ci ne le délimite absolument pas, sauf s'il était brûlé, mais cette possibilité ne se pose même pas pour des raisons d'esthétique du produit fini et du fait de la consommation énergétique que cela impliquerait.

## DESCRIPTION DE L'INVENTION

Les améliorations introduites par l'invention ont été conçues afin de permettre aux machines de conditionnement de fonctionner en mode classique mais en utilisant du papier, et ce à partir tant de deux bandes continues que d'une bande unique, sans que se pose le problème de la découpe susmentionné.

Pour ce faire, et d'une manière plus précise, les améliorations proposées sont axées sur le remplacement des fils métalliques de chauffage classiques par des baguettes à forte section, qui sont regroupées par couples et forment des étaux longitudinaux et parfois transversaux. L'un des éléments de l'étau est fixe, en règle générale l'élément inférieur; l'autre élément est basculant, afin de permettre l'ouverture de l'étau et la libération subséquente du papier pour conditionnement, qui va progresser alors sur la plate-forme opérationnelle de la machine.

Les faces des baguettes sont affrontées conformément au sens de fermeture de l'étau; elles sont munies de stries ou de dents complémentaires qui potentialisent l'effet de soudure sur papier. Des cannelures ou des logements longitudinaux sont ménagés sur les baguettes pour les éléments de chauffage, en règle générale des résistances électriques à chaleur soit continue, soit intermittente, en fonction du type de papier.

Conformément à une autre des caractéristiques de l'invention, les baguettes des étaux longitudinaux sont simples, alors que celles des étaux transversaux sont doubles. Entre ces baguettes doubles, et plus précisément entre les deux secteurs de la baguette double inférieure, coulisse une lame de coupe commandée par un vérin hydraulique ou pneumatique. Cette lame assure la découpe du corps tubulaire du papier qui permet de séparer les plateaux entre eux après l'opération de fermeture.

Logiquement, les étaux susmentionnés peuvent être commandés d'une manière manuelle et/ou mécanique; dans ce cas, ils sont commandés également par des vérins hydrauliques ou pneumatiques pour l'ouverture et la fermeture. La machine de conditionnement est équipée de butées de fin de course et de tous les automatismes nécessaires au fonctionnement en mode automatique au choix.

## DESCRIPTION DES SCHEMAS

Afin de compléter la description et d'aider à une meilleure compréhension des caractéristiques de l'invention, le présent mémoire descriptif est accompagné d'un jeu de schémas qui en fait partie intégrante et qui représente, à titre illustratif et non limitatif:

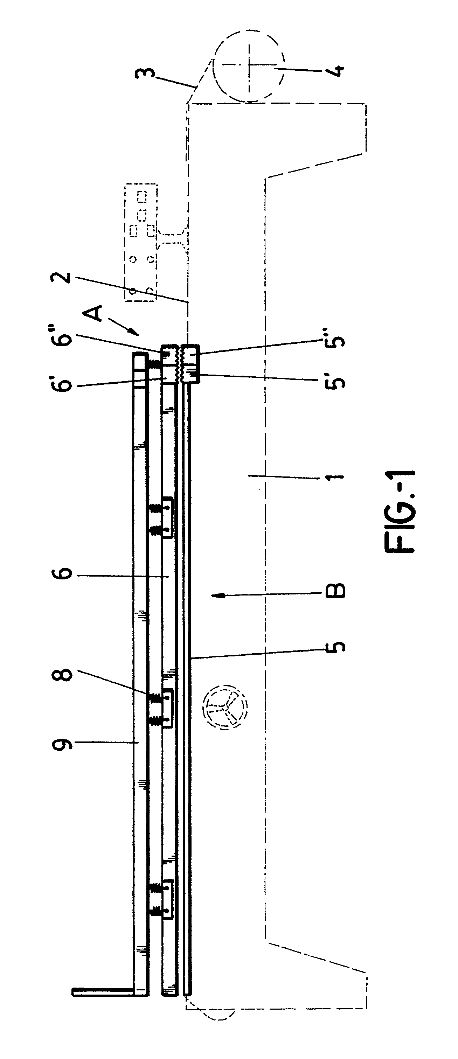

Figure 1.- Représentation schématique en levé latéral d'une machine de conditionnement équipée des améliorations faisant l'objet de la présente invention, qui y figurent en trait gras face au trait discontinu de la structure générale de la machine.

Figure 2.- Représentation similaire à celle de la figure 1, mais en profit, de la même machine.

Figure 3.- Représentation du profil de la machine opposé à celui de la figure précédente.

Figure 4.- Représentation schématique en plan des éléments chauffants. Ces éléments sont représentés sous forme de trait continu dans le cas d'une feuille de papier unique et sous forme de trait discontinu dans le cas de deux feuilles destinées à se superposer.

Figure 5.- Représentation en section transversale d'un détail d'un des éléments chauffants.

Figure 6.- En dernier lieu, représentation en section transversale d'un autre élément chauffant, concrètement de l'élément double au sein duquel coulisse la lame de coupe destinée à séparer les plateaux conditionnés.

## REALISATION PREFERENTIELLE DE L'INVENTION

Les figures montrent qu'une machine de conditionnement réalisée conformément aux améliorations proposées comprend, comme toute autre machine conventionnelle de ce type, un bâti (1) supportant une plate-forme de travail (2) destinée à recevoir par un quelconque moyen les plateaux de denrées alimentaires à conditionner, ou tout autre objet, et ce sur une bande de papier (3) continue et fournie par une bobine (4). Cette bande est rabattue sur elle-même après interposition des plateaux par des moyens également conventionnels. La possibilité existe de prévoir deux bobines (4) fournissant deux bandes de papier superposées.

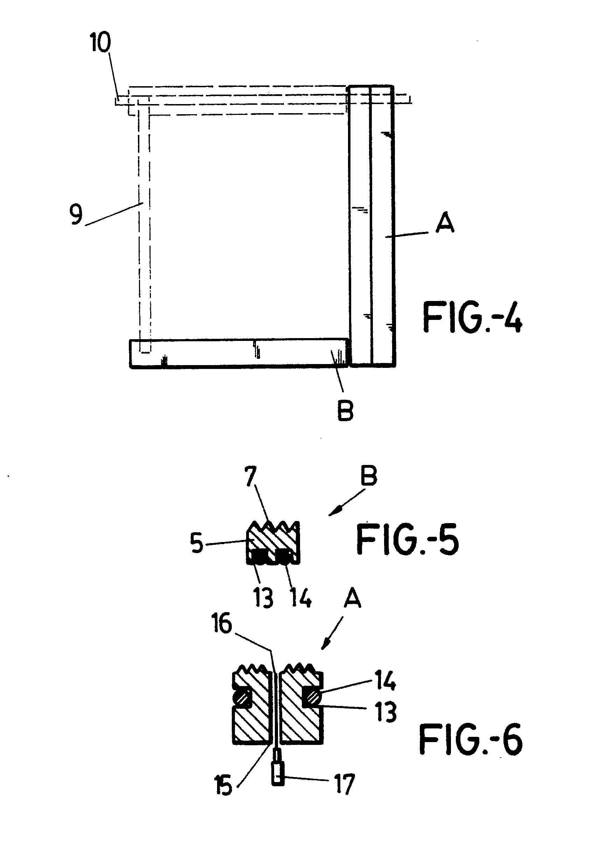

A partir de cette structure de base, la machine est équipée (comme le montre la figure 4) d'un élément chauffant transversal A et au moins d'un élément chauffant longitudinal B, dans le cas d'une bande de papier (3) unique rabattue sur elle-même; dans le cas de deux bandes de papier superposées, la machine incorpore aussi deux éléments chauffants longitudinaux B-B', qui ont pour objet évidemment de transformer la feuille de papier en un tube parfaitement fermé, alors que l'élément chauffant transversal A sert à fragmenter le tube continu et à fermer par leurs extrémités les plateaux que la machine débite en continu également.

Chacun de ces éléments chauffants ou chauffés A-B est intégré dans un ensemble de deux baguettes, une baguette inférieure (5), fixe sur le châssis de la machine, et une baguette supérieure (6), mobile, qui constituent un étau. Les surfaces de ces deux éléments sont affrontées; elles sont soit travaillées à la molette, soit munies de dents (7) ou de toute autre structure complémentaire susceptible d'assurer une fixation optimale des deux feuilles de papier et une union intime entre elles.

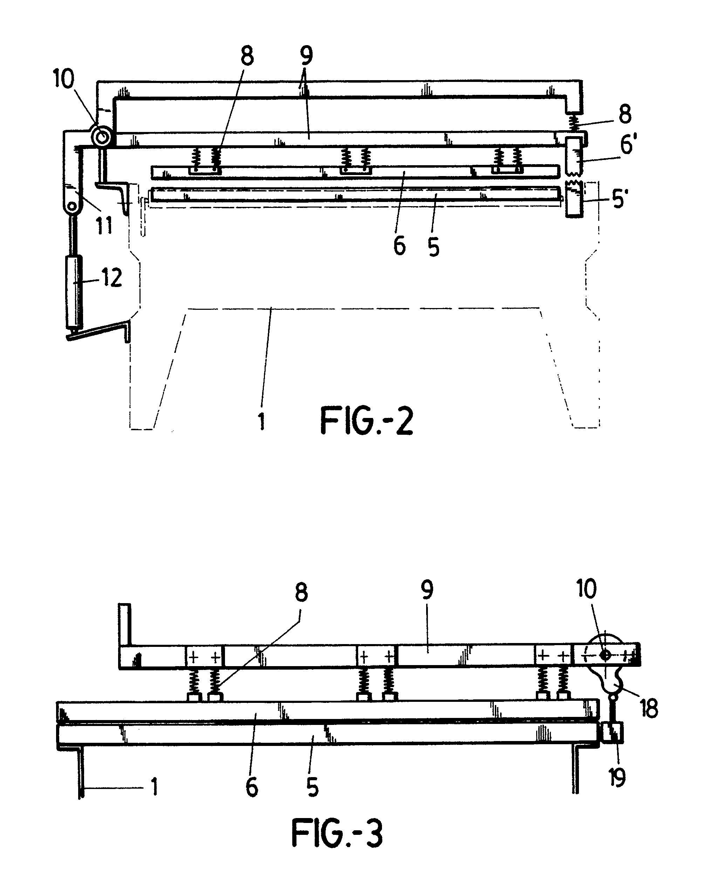

La baguette supérieure (6) est reliée par un ressort (8) à une structure de support (9), qui est commune aux étaux longitudinaux et aux étaux transversaux, comme le montre la figure 2. Cette structure de support (9) est montée comme un élément basculant sur un arbre (10), prolongé à son tour par un bras (11) grâce auquel la structure est commandée par un vérin (12), ce dernier étant l'élément qui commande réellement les manoeuvres d'ouverture et de fermeture des étaux sur le papier.

Afin d'assurer l'effet de soudure recherché, des cannelures longitudinales (13) sont ménagées sur les baguettes porteuses des éléments chauffants. Ces cannelures, qui ne doivent en aucun cas être ménagées sur les faces opérationnelles (7), vont loger les éléments chauffants proprement dits (14), en règle générale des résistances électriques.

Il faut souligner, comme le montre par ailleurs la figure 6, que l'élément chauffant transversal A comprend, au niveau inférieur comme au niveau supérieur, deux baguettes (5'-5"), munies toutes deux de leur cannelure et de leur résistance chauffante correspondantes, qui définissent entre elles une fente (15) dans laquelle coulisse la lame (16) de coupe du papier, qui est commandée par un petit vérin (17). Il est évident que si la lame coulisse dans la baguette double inférieure, la baguette double supérieure présentera une encoche destinée à faciliter l'opération de découpe, et vice-versa.

Enfin, comme le montre la figure 3, une came (18) est montée sur l'arbre (10) de basculement de la structure de support (9); cette came agit sur une butée de fin de course (19), qui a pour objet de contrôler les mouvements de basculement des étaux chauffants.

Il n'est pas nécessaire de détailler davantage cette description pour que les experts en la matière saisissent et la portée de l'invention et les avantages qui peuvent en découler.

Les matériaux, la forme, la taille et la disposition des éléments peuvent être modifiés pourvu que la modification n'entraîne pas une altération quelconque du principe essentiel de l'invention.

Les termes utilisés dans ce mémoire doivent être pris dans tous les cas dans un sens large et non limitatif.

## Revendications

1. Améliorations introduites au niveau des machines de conditionnement, notamment de denrées alimentaires contenues dans des plateaux, utilisant du papier spécial, thermosoudable, et faisant appel soit à une feuille unique qui se rabat sur elle-même, soit à deux feuilles superposées, avec interposition dans l'un et l'autre cas des plateaux à conditionner. Ces améliorations se caractérisent essentiellement par la mise en place sur la plate-forme de travail de la machine d'au moins un élément chauffant longitudinal et d'un élément chauffant transversal. Chacun de ces éléments comprend une baguette inférieure, fixée sur le châssis de la machine, et une baguette supérieure rabattable sur la précédente. Les faces d'adaptation de ces baguettes sont munies de dents ou travaillées à la molette afin d'assurer la fixation et la déformation de la double feuille de papier. Les autres faces des baguettes sont munies de cannelures destinées au logement des éléments chauffants proprement dits, des résistances électriques de préférence, qui réalisent le soudage du papier parallèlement à l'insertion superficielle de celui-ci par les dentures susmentionnées.

2. Améliorations introduites au niveau des machines de conditionnement, aux termes de la première revendication, caractérisées comme suit: en cas d'utilisation d'une feuille de papier unique, qui est rabattue sur elle-même, la machine incorpore un seul élément chauffant longitudinal; en cas d'utilisation de deux feuilles de papier physiquement indépendantes, la machine incorpore deux éléments chauffants longitudinaux, situés de part et d'autre de la plate-forme de travail.

3. Améliorations introduites au niveau des machines de conditionnement, aux termes des revendications précédentes, caractérisées par le fait que les baguettes constitutives de l'élément chauffant transversal sont doubles, tant la baguette supérieure que la baguette inférieure, de telle façon qu'elles définissent des fentes dans lesquelles coulisse une lame de coupe du papier, située au niveau moyen de l'étau correspondant défini par ledit élément chauffant et commandée d'une manière appropriée, de préférence par un vérin.

4. Améliorations introduites au niveau des machines de conditionnement, aux termes des revendications précédentes, caractérisées par le fait que les baguettes supérieures ou rabattables des deux ou trois éléments chauffants sont reliées par des ressorts à une structure de support supérieure montée par l'intermédiaire d'un arbre transversal sur le bâti de la machine, et qui se prolonge à l'opposé de cet arbre de basculement par un bras ou bielle commandé par un vérin, hydraulique ou pneumatique, qui assure en fait l'ouverture et la fermeture des étaux.

FIG.-1

EP 0 462 348 A1

FIG.-2

FIG.-3

FIG.-4

FIG.-5

FIG.-6

**Office européen
des brevets**

**RAPPORT DE RECHERCHE
EUROPEENNE**

Numéro de la demande

**EP 90 50 0062**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 650 535 (CH. BENNETT)<br>* colonne 5, ligne 16 - colonne 6, ligne 53 * * colonne 11, ligne 8 - ligne 37; figures *<br>– – – | 1-4 | B 65 B 51/14<br>B 29 C 65/18 |
| Y | GB-A-9 763 17 (PITTSBURGH PLATE GLASS)<br>* page 2, ligne 107 - page 3, ligne 11 * * page 3, ligne 120 - page 4, ligne 43; revendications 3,10; figures *<br>– – – | 1-4 | |
| Y | US-A-4 697 401 (S. KESSLER)<br>* colonne 5, ligne 30 - ligne 58; figures *<br>– – – | 3 | |
| A | GB-A-1 604 920 (TEX INNOVATION)<br>* page 5, ligne 3 - ligne 46; revendications 1,8; figures *<br>– – – | 2 | |
| A | GB-A-1 397 478 (F. ROWELL)<br>– – – | | |
| A | CH-A-2 644 71 (A. BLAND)<br>– – – | | |
| A | US-A-2 641 304 (G. BIDDINGER)<br>– – – – – | | |

**DOMAINES TECHNIQUES
RECHERCHES (Int. Cl.5)**

B 65 B
B 29 C

Le présent rapport de recherche a été établi pour toutes les revendications

| Lieu de la recherche | Date d'achèvement de la recherche | Examinateur |
|---|---|---|
| La Haye | 12 septembre 91 | JAGUSIAK A.H.G. |